# EUROPEAN PATENT APPLICATION

(11) **EP 2 924 823 A1**
(43) Date of publication of application: **30.09.2015**
(21) Application number: 14004157.5
(22) Date of filing: 10.12.2014
(51) Int. Cl.: H02B 1/44

(54) **Electrical cabinet with a door mounted pivotably by pins**

(30) Priority: 28.03.2014 EP 14001153
(71) Applicant: ABB AG, 68309 Mannheim (DE)
(72) Inventor: Van-Den-Bosch, Jules, 5216GX s'Hertogenbosch (NL); Witte, Adriaan Marinus, 3436 HT Nieuwegen (NL)

(57) **Abstract**

The invention is about an electrical cabinet of the kind comprising a door (1) mounted pivotably by pins to a frame, said door (1) having two hinge pins (2, 3) which define the pivoting axis of the door (1). The door leaf (4) is laterally provided with flat rods (5, 6, 7) which are aligned perpendicularly to the plane of the door leaf (4), the door (1) is provided with at least one elongated, flexible hinge bar (8), the hinge bar (8) is resting against and releasably mounted at the inward-looking side (10) of one of the flat rods (5, 6), the elongated hinge bar (8) is provided at a first of its end sections (11) with a hinge pin (2, 3) projecting perpendicular to the flat side of the elongated hinge bar (8, 9), the flat rod (6, 5) has a punched hole (12, 13) aligned with the hinge pin (2, 3) at the elongated hinge bar (8, 9), the hinge pin (2, 3) at the hinge bar (8, 9) passes through the punched hole (13, 12), projecting perpendicular outward from the outer side (14) of the flat rod (6), wherein the end section (18) of the elongated hinge bar (18, 19) which is bearing the hinge pin (2, 3) can be lifted off resiliently, pulling the hinge pin (2, 3) away from the outer side (14) of the flat rod (6) so that the door (1) can be mounted to or dismantled from the door frame when the hinge bar (8, 9) is lifted off.

## Description

The invention is about an electrical cabinet of the kind comprising a door mounted pivotably by pins to a frame, said door having two hinge pins which define the pivot-ing axis of the door, according to the preamble of claim 1.

An electrical cabinet of the kind is shown in EP 0 844 710 B1. The hinge pins in this embodiment are extending in prolongation of the edge of the long side of the door leaf, and they are integrally fixed to the door. This makes it difficult to mount and dismount the door into the doorframe of the cabinet.

In order to facilitate the assembly and disassembly of the door to the door frame of the cabinet, EP 2 663 495 proposes an embodiment where in the narrow top and bottom edge of the door a flexible tongue is provided by forming a U-shaped recess, the inner part of the U-shaped recess establishing the flexible tongue, like a bending beam fixed at its one narrow side, and the hinge pin is provided at the free end of the flexible tongue. As the flexible tongue can be pushed down by means of a tool, like a screwdriver, and so the pin can be released from its pin bearing in the door frame to facilitate assembly and disassembly of the door, the design of the flexible tongue as integrated part of the door makes the door a complicated, unflexible and expensive part.

It is the objective of the present invention to create an electrical cabinet of the kind comprising a door mounted pivotably by pins to a frame, whereby the assembly and disassembly of the door is easy and the door design is simple and low cost.

The object is achieved by an an electrical cabinet of the kind comprising a door mounted pivotably by pins to a frame with the features of claim 1.

So according to the invention the door leaf is laterally provided with flat rods which are aligned perpendicularly to the plane of the door leaf, and the door is provided with at least one elongated, flexible hinge bar, and the hinge bar is resting against and releasably mounted at the inward-looking side of one of the flat rods, and the elongated hinge bar is provided at a first of its end sections with a hinge pin projecting perpendicular to the flat side of the elongated hinge bar, and the flat rod has a punched hole aligned with the hinge pin at the elongated hinge bar, and the hinge pin at the hinge bar passes through the punched hole, projecting perpendicularly outward from the outer side of the flat rod, wherein the end section of the elongated hinge bar which is bearing the hinge pin can be lifted off resiliently, pulling the hinge pin away from the outer side of the flat rod so that the door can be mounted to or dismantled from the door frame when the hinge bar is lifted off.

The hinge bar which is provided with the hinge pin fulfills in principle a function like a flexible tongue.

But the embodiment according to the invention is very simple and easy to build.

The flexible tongue, or hinge bar, according to the invention, comes as an extra part which is attached to the inner side of a flat rod forming a kind of inner frame to the door leaf.

So the door leaf is a simple one, just flat, being provided with a frame composed of the flat rods.

No complicated inserts into the flat rods have to be made to provide the flexible tongue or hinge bar with the hinge pin.

The hinge bar is just very simply attached in a flat manner to the inner side of the flat rod. This can be done without a special tool. It can be just simply click-mounted.

So an additional advantage of the cabinet according to the present invention is that it can be delivered to a customer in the form of an assembly kit, door and hinge pins separately, and the customer assembles the hinge-bar or hinge bars to the door by himself.

This is possible due to the very simple design of each of the single parts of the assembly kit.

Whereas in principle it would be sufficient to have only one of the hinge pins provided at an end of an flexible tongue or hinge bar for pushing it inwards for assembly and disassembly of the door, and the second pin could be firmly fixed at the door, it is more advantageous to have both hinge pins provided with such a flexible tongue attached to the flat rods of the door. This is because then the door can be mounted both sides, no preferred assembly side is necessary, and the door can be made real-ly in a simple way.

According to an advantageous embodiment of the invention, in a central section of the elongated hinge bar there is provided a fixing knob, projecting in the same direction as the hinge pin, and the flat rod has a fixing section which is configured to cooperate with the fixing knob for fixing the hinge bar to the flat rod.

This embodiment enables a very simple attachment and fixation procedure of the hinge bar or flexible tongue to the flat frame rod of the door. The fixing knob fixes the central part of the hinge rod at the fixing section, so that the one end bearing the hinge pin can be bent away without removing the hinge bar from the flat frame rod of the door.

According to an advantageous embodiment of the invention, the fixing knob has a first section in the form of a support column which is formed to the hinge bar, and a second section in the form of a top plate, which is formed to the free end of the support column, wherein the top plate projects over the supporting column.

According to an advantageous embodiment of the invention the fixing section has the form of a recess which is open towards the free edge of the rod, and which is aligned with the fixing knob, and the fixing knob can be inserted into the recess through its opening at the free edge of the flat rod, and upon insertion into the recess the fixing knob is releasably held in the recess.

According to an advantageous embodiment of the invention, in the area of the recess the wall thickness of the flat rod is reduced compared to the remaining part of the flat rod.

According to an advantageous embodiment of the invention, the fixing section has the form of a long hole which has a first section with a contour adapted to the contour of the top plate of the fixing knob, and has a second section with a contour which is smaller than the contour of the first section and which is adapted to the contour of the support column of the fixing knob.

According to an advantageous embodiment of the invention, in a pre-mounting position the top plate fits through the first section, and in a mounting position the fixing knob is located with its support column in the second section of the long hole.

According to an advantageous embodiment of the invention, the elongated hinge bar is provided at its second end section with a locking knob, projecting in the same direction as the hinge pin and the fixing knob, and that the flat rod has a second punched hole aligned with the locking knob, and that the locking knob can be inserted into the second hole and upon insertion is fixed in the second hole.

The advantage of this embodiment is that the locking knob renders the elongated hinge bar stability against pivoting around the fixing knob. The fixing knob in cooperation with the locking knob firmly hold the flexible tongue in position, allowing just a bending away of the one end section which is provided with the hinge pin.

According to an advantageous embodiment of the invention the end section of the elongated hinge bar which can be lifted off for mounting or dismounting of the door reaches from the fixing knob to the first end section.

According to an advantageous embodiment of the invention the elongated hinge bar is made of an elastic material, whereas the door with the flat rod and the door leaf is made of metal.

According to an advantageous embodiment, the door can be made of another rigid material but metal, for example a rigid plastic material. The door can as well be made of a rigid transparent material, for example a rigid transparent plastic material.

Further details, advantages and features of the invention can be seen in the following description of a preferred embodiment of the invention.
Figure 1 shows schematically the door and the two hinge bars prior to assembly,
Figure 2 shows the door with one of the hinge bars inserted with the hinge pin in the punched hole in the flat rod,
Figure 3 shows a side view on the flat rod of the door with the hinge bar close to beIng inserted with its fixing knob into the U-shaped recess,
Figure 4 shows a side view on the outer side of the flat rod of the door, with the hinge bar fully assembled, the knob being inserted in the second hole as well,
Figure 5 shows a top view into the door, the flexible first end section of the hinge bar with the hinge pin being lifted off the inner side of the flat rod with a screw driver to release the hinge pin.
Figure 6a shows a perspective top view on the flat rod of the door and the hinge bar, both in an second embodiment, close to assembly,
Figure 6b shows the hinge bar in the second embodiment as shown in figure 6a assembled to the flat rod of the door in the second embodiment as shown in figure 6a.

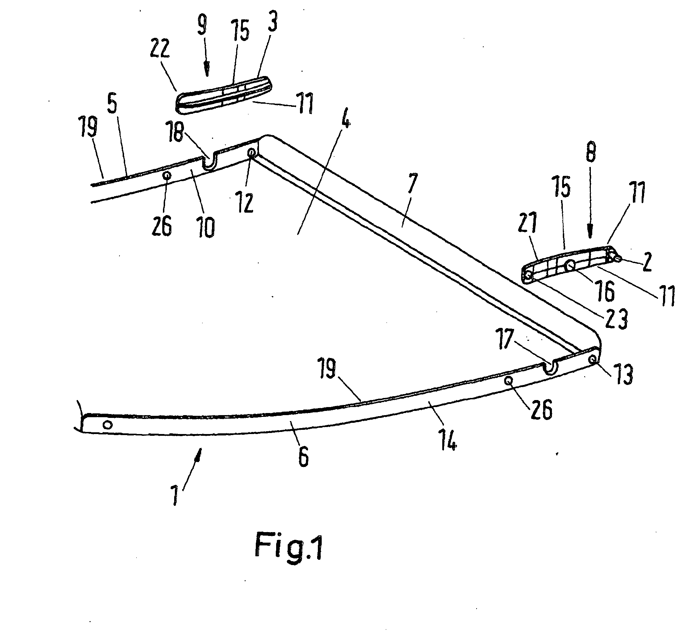

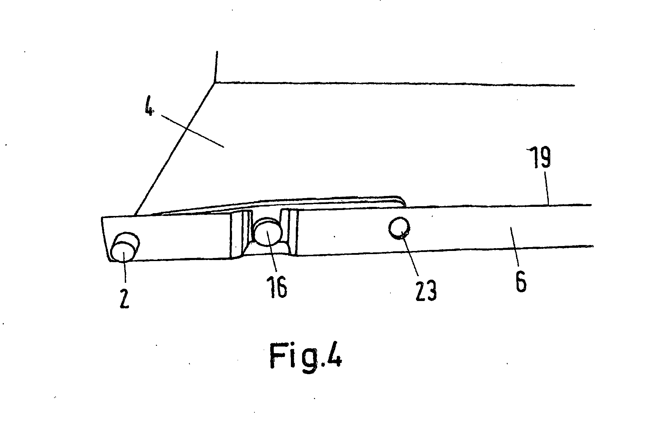

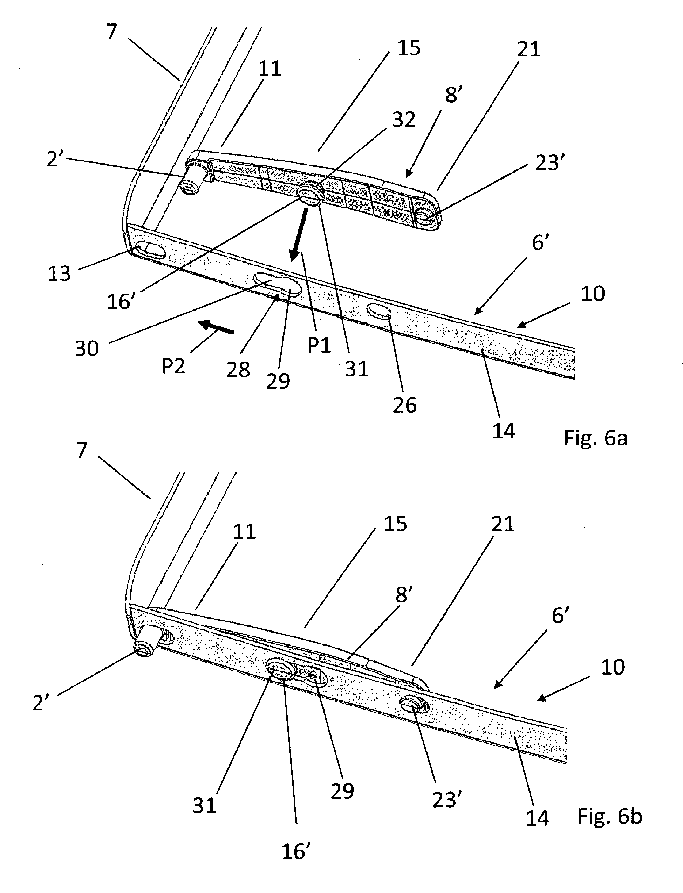

In the figures, equal or equivalent or equally or equivalently functioning parts, elements or sub-assemblies have the same reference number, occasionally with an added apostrophe '. Particularly, comparing the first embodiment as shown in figures 1 to 5 and the second embodiment as shown in figure 6a and 6b, this is the case for the following elements: hinge pin 2, 2'; flat rod 6, 6'; hinge bar 8, 8'; fixing knob 16, 16'; locking knob 23, 23'.

Figure 1 shows a door 1 for an electrical cabinet of the kind comprising a door mounted pivotably by pins to a frame, whereby the door has two hinge pins which define the pivoting axis of the door.

The door leaf 4 is laterally provided with flat rods 5, 6, 7, which are aligned perpendicularly to the plane of the door leaf 4, forming a kind of frame to the door leaf.

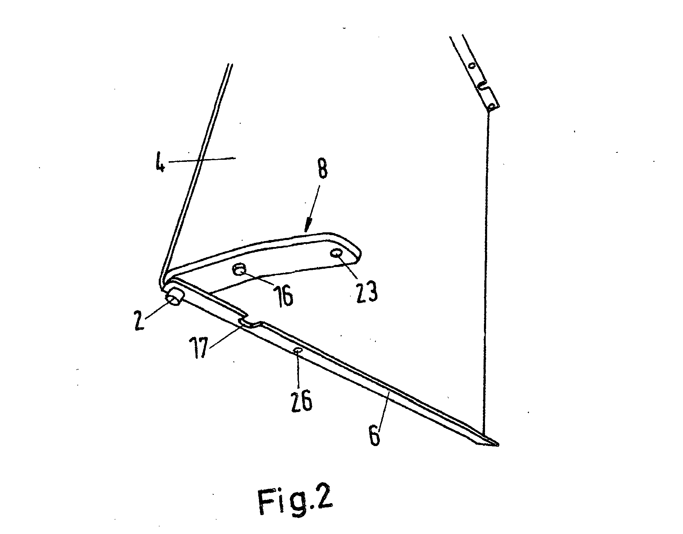

The door 1 is provided with two elongated, flexible hinge bars 8, 9. In figure 1, the door and the hinge bars 8, 9 are shown as separate parts, as they would come in an assembly kit to the customer. The customer would assemble the two hinge bars to the door applying the steps in the sequences as shown in the figures 2 - 4.

When assembled, each of the hinge bars 8, 9 is resting against and releasably mounted at the inward-looking side 10 of one of the flat rods 5, 6.

Each of the elongated hinge bars 8, 9 is provided at a first of its end sections 11 with a hinge pin 2, 3 projecting perpendicular to the flat side of the elongated hinge bar 8, 9. Each of the flat rods 6, 5 has a punched hole 12, 13 aligned with the hinge pin 2, 3 at the elongated hinge bar 8, 9.

Each of the hinge pins 2, 3 at the hinge bars 8, 9 passes through the punched hole 12, 13 to which it is aligned, projecting perpendicular outward from the outer side 14 of the flat rod 6, 5.

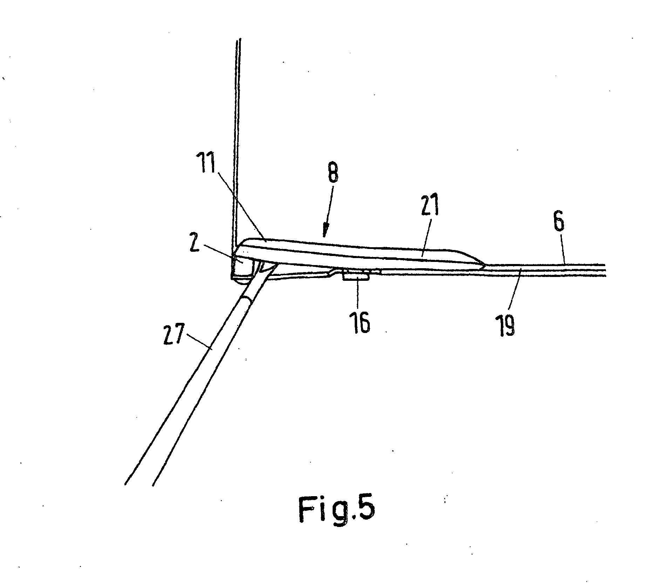

The end section 11 of the elongated hinge bar 18, 19, which is bearing the hinge pin 2, 3, can be lifted off resiliently, pulling the hinge pin 2, 3 away from the outer side 14 of the flat rod 6, 5, as shown in figure 5, so that the door 1 can be mounted to or dismantled from the door frame when the hinge bar 8, 9 is lifted off.

Looking closer to the hinge bars 8, 9, see figure 1, one sees that in a central section 15 of each of the elongated hinge bars 8, 9 there is provided a fixing knob 16, projecting in the same direction as the hinge pin 2, 3.

Each of the flat rods 5, 6 has a recess 17, 18 which is open towards the free edge 19, 20 of the rod 5,6, and which is aligned with the fixing knob 16.

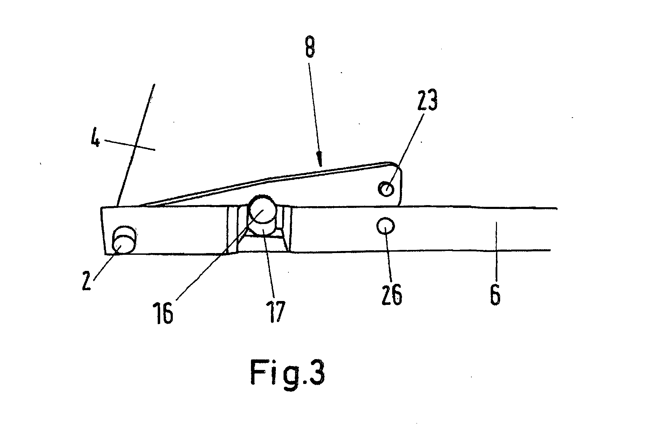

The fixing knob 16 can be inserted into the recess 17, 18, from above, through its opening at the free edge 19, 20 of the flat rod 6, 5, see figure 3.

Upon insertion into the recess 17, 18 the fixing knob 16 is releasably held in the recess 17, 18.

Looking closer to the fixing knob 16, this is composed of a first section in the form of a supporting column, and a second section in the form of a top plate. The top plate projects above the supporting column. In the embodiment as shown here in the figures, both the supporting column and the top plate have a circular diameter.

The length of the support column, i.e. the distance between the hinge bar 8, 9 and the cover plate, is adapted to the thickness of the flat rod 5, 6, 6'. Adapted to means that it is about as long as the flat rod 5, 6, 6' is thick in the area of the recess 17, 18. By this upon insertion of the fixing knob 16 into the recess 17,18, the hinge bar 8, 9 is firmly clamped to the flat rod 5, 6, 6'.

In the area of the recess 17, 18, the wall thickness of the flat rod 6, 5 is reduced a bit compared to the remaining part of the flat rod 6, 5. The dimension of the opening of the recess 17, 18 is configured such that it matches the diameter of the supporting column of the fixing knob 16, but is smaller than the diameter of the top plate of the fixing knob 16. The fixing knob 16 upon insertion into the recess 17,18 is gliding into the recess with its supporting column, and it is held there clamped to the wall of the flat rod 6, 5 between the top plate on one side and the central section of the hinge bar on the other side. Figures 3, 4 and 5 illustrate this.

Each of the elongated hinge bars 8, 9 is provided at its second end section 21, 22 with a locking knob 23,24, projecting in the same direction as the hinge pin 2, 3 and the fixing knob 16.

Each of the flat rods 6, 6' has a second punched hole 25, 26 aligned with one of the locking knobs 23, 24.

Each of the locking knobs 23, 24 can be inserted into one of the second holes 25, 26 and upon insertion it is fixed in that second hole 25, 26.

The end section of each of the elongated hinge bars 8, 9 which can be lifted off for mounting or dismounting of the door 1 reaches from the fixing knob 16 to the end of the first end section 11, 12.

Now looking at figures 6a and 6b, there is shown a second embodiment of the way how to fix the hinge bar 8, 8' to the flat rod 5, 6, 6' of the door. Here in this embodiment the fixing section has the form of a long hole 28, which has a first section 29 with a contour adapted to the contour of the top plate 31 of the fixing knob 16'. The contour of the first section of this long hole is here a circular contour. The cover plate 31 of the fixing knob 16' is a circular disc here as an example. The diameter of the cover plate 31 is adapted to the diameter of the circular contour of the first section 29 of the long hole 28. This means that the cover plate 31 can be inserted through the first section 29 of the long hole 28.

Adjacent to the first section 29, it has a second section 30 with a contour which is smaller than the contour of the first section and which is adapted to the contour of the support column 32 of the fixing knob 16'. This means that the support column 32 of the fixing knob 16' fits into the second section 30, but the contour of the second section 30 is smaller than the cover plate 31 of the fixing knob 16'.

Fixing of the fixing knob 16' to the flat rod 5, 5, 6' is done in a two staged process. First the cover plate 31 of the fixing knob 16' is inserted into the second section 30, in a movement perpendicular to the flat rod 5, 6, 6', see direction of arrow P1. Once the cover plate 31 has completely passed through the first section 29, the hinge bar 8' with the fixing knob 16' is moved in direction of arrow P2, in parallel to the long side of the flat rod 5, 6, 6'. In this step, the support column 32 is pushed into the second, smaller section 30 of the long hole 28. As the cover plate 31 is larger than the diameter of the second section 30 of the long hole 28, it cannot be withdrawn back from the flat rod 5, 6, 6' perpendicular to the flat rod 5, 6, 6', in a direction opposite to arrow P1.

The length of the support column 32, i.e. the distance between the hinge bar 8' and the cover plate 31, is adapted to the thickness of the flat rod 5, 6, 6'. Adapted to means that it is about as long as the flat rod 5, 6, 6' is thick. By this upon insertion of the fixing knob 16' into the second section 30 of the long hole 28, the hinge bar 8' is firmly clamped to the flat rod 5, 6, 6'.

In other words, in a pre-mounting position the top plate 31 fits through the first section 29, and in a mounting position the fixing knob 16' is located with its support column in the second section 30 of the long hole 28.

Each of the elongated hinge bars 8, 8', 9 is made of an elastic material, whereas the door 1 with the flat rods 5, 6, 7 and the door leaf 4 is made of metal. The door can in an alternative embodiment be made as well of another rigid material such as a rigid plastic material, it could even be a transparent rigid material.

**List of reference signs**

| | | | |
|---|---|---|---|
| 1 | door | 27 | screwdriver |
| 2 | hinge pin | 28 | long hole |
| 2' | hinge pin | 29 | first section of long hole |
| 3 | hinge pin | 30 | second section of long hole |
| 4 | door leaf | 31 | cover plate |
| 5 | flat rod | 32 | support column |
| 6 | flat rod | | |
| 6' | flat rod | | |
| 7 | flat rod | | |
| 8 | hinge bar | | |
| 8' | hinge bar | | |
| 9 | hinge bar | | |
| 10 | inward looking side | | |
| 11 | first end section of hinge bar | | |
| 12 | punched hole aligned with hinge bar | | |
| 13 | punched hole aligned with hinge bar | | |
| 14 | outer side of flat rod | | |
| 15 | central section of hinge bar | | |
| 16 | fixing knob | | |
| 16' | fixing knob | | |
| 17 | recess | | |
| 18 | recess | | |
| 19 | free edge of flat rod | | |
| 20 | free edge of flat rod | | |
| 21 | second end section | | |
| 22 | second end section | | |
| 23 | locking knob | | |
| 23' | locking knob | | |
| 24 | locking knob | | |
| 25 | second hole | | |
| 26 | second hole | | |

## Claims

1. An electrical cabinet of the kind comprising a door (1) mounted pivotably by pins to a frame, said door (1) having two hinge pins (2, 2'; 3) which define the pivoting axis of the door (1),
**characterized in that** the door leaf (4) is laterally provided with flat rods (5; 6, 6'; 7) which are aligned perpendicularly to the plane of the door leaf (4), that the door (1) is provided with at least one elongated, flexible hinge bar (8; 8'), that the hinge bar (8; 8') is resting against and releasably mounted at an inward-looking side (10) of one of the flat rods (5; 6, 6'), that the elongated hinge bar (8; 8') is provided at a first of its end sections (11) with a hinge pin (2, 2'; 3) projecting perpendicular to the flat side of the elongated hinge bar (8, 8'; 9), that the flat rod (6, 6'; 5) has a punched hole (12, 13) aligned with the hinge pin (2, 2'; 3) at the elongated hinge bar (8, 8'; 9), that the hinge pin (2, 2'; 3) at the hinge bar (8, 8'; 9) passes through the punched hole (13, 12), projecting perpendicular outward from the outer side (14) of the flat rod (6, 6'), wherein the end section (11) of the elongated hinge bar (8, 8'; 9) which is bearing the hinge pin (2, 2'; 3) can be lifted off resiliently, pulling the hinge pin (2, 2'; 3) away from the outer side (14) of the flat rod (6, 6') so that the door (1) can be mounted to or dismantled from the door frame when the hinge bar (8, 8'; 9) is lifted off.

2. A cabinet according to claim 1, **characterized in that** in a central section (15) of the elongated hinge bar (8, 8'; 9) there is provided a fixing knob (16, 16'), projecting in the same direction as the hinge pin (2, 2'; 3), and that the flat rod (6, 6'; 7) has a fixing section which is configured to cooperate with the fixing knob (16, 16') for fixing the hinge bar (8, 8'; 9) to the flat rod (6, 6'; 7).

3. A cabinet according to claim 2, **characterized in that** the fixing knob (16, 16') has a first section in the form of a support column (32) which is formed to the hinge bar (8, 8'; 9), and a second section in the form of a top plate (31), which is formed to the free end of the support column (32), wherein the top plate (31) projects over the supporting column (32).

4. A cabinet according to claim 3, **characterized in that** the fixing section has the form of a recess (17, 18) which is open towards the free edge (19,20) of the rod (8, 9), and which is aligned with the fixing knob (16), and that the fixing knob (16) can be inserted into the recess (17, 18) through its opening at the free edge (19, 20) of the flat rod (8, 9), and that upon insertion into the recess (17, 18) the fixing knob (16) is releasably held in the recess (17, 18).

5. A cabinet according to claim 4, **characterized in that** in the area of the recess (17, 18) the wall thickness of the flat rod (6, 6'; 7) is reduced compared to the remaining part of the flat rod (6, 6'; 7).

6. A cabinet according to claim 3, **characterized in that** the fixing section has the form of a long hole 28, which has a first section (29) with a contour adapted to the contour of the top plate (31) of the fixing knob (16'), and has a second section 30 with a contour which is smaller than the contour of the first section and which is adapted to the contour of the support column (32) of the fixing knob (16').

7. A cabinet according to claim 6, **characterized in that** in a pre-mounting position the top plate (31) fits through the first section (29), and that in a mounting position the fixing knob (16') is located with its support column in the second section (30) of the long hole (28)

8. A cabinet according to claim 2, **characterized in that** the elongated hinge bar (8, 8', 9) is provided at its second end section (21, 22) with a locking knob (23, 23', 24), projecting in the same direction as the hinge pin (2, 2', 3) and the fixing knob (16, 16'), and that the flat rod (6, 6') has a second punched hole (25, 26) aligned with the locking knob (23, 23', 24), and that the locking knob (23, 23' 24) can be inserted into the second hole (25, 26) and upon insertion is fixed in the second hole (25, 26).

9. A cabinet according to claim 8, **characterized in that** the end section of the elongated hinge bar (8, 8', 9) which can be lifted off for mounting or dismounting of the door (1) reaches from the fixing knob (16) to the end of the first end section (11, 12).

10. A cabinet according to any of the preceding claims, **characterized in that** the elongated hinge bar (8, 8' 9) is made of an elastic material, whereas the door (1) with the flat rod (5, 6, 7) and the door leaf (4) is made of metal.

11. A cabinet according to any of claims 1 to 9, **characterized in that** the elongated hinge bar (8, 8', 9) is made of an elastic material, whereas the door (1) with the flat rod (5, 6, 7) and the door leaf (4) is made of a rigid plastic material.
